# EUROPÄISCHE PATENTANMELDUNG

(11) **EP 3 182 064 A1**
(43) Veröffentlichungstag der Anmeldung: **21.06.2017**
(21) Anmeldenummer: 16203750.1
(22) Anmeldetag: 13.12.2016
(51) Int. Cl.: G01B 21/20, G01B 21/32, G01N 25/16, G01M 99/00

(54) **VERFAHREN ZUR BESTIMMUNG EINER OBERFLÄCHENPROFILÄNDERUNG EINER FÜLLMASSE IN EINER AUSSPARUNG**

(30) Priorität: 16.12.2015 DE 102015225503
(71) Anmelder: Airbus Defence and Space GmbH, 82024 Taufkirchen (DE)
(72) Erfinder: HERRLES, Christian, 85521 Riemerling (DE); HÖNNIGE, Jan Roman, 21385 Amelinghausen (DE); TREITZ, Michael, 80796 München (DE); MEYER, Meinhard, 81739 München (DE)
(74) Vertreter: Isarpatent

(57) **Zusammenfassung**

Die vorliegende Erfindung schafft ein Verfahren zur Bestimmung einer Oberflächenprofiländerung einer Füllmasse in einer Aussparung mit Ermitteln eines ersten Oberflächenprofils einer Oberfläche der Füllmasse über die Aussparung hinweg bei einer Ausgangstemperatur; Abkühlen oder Erwärmen der Aussparung mit der Füllmasse auf eine vorgegebene Messtemperatur; Ermitteln eines zweiten Oberflächenprofils der Oberfläche der Füllmasse über die Aussparung hinweg bei der Messtemperatur; und Vergleichen des zweiten Oberflächenprofils mit dem ersten Oberflächenprofil zur Bestimmung der Oberflächenprofiländerung.

## Beschreibung

Die vorliegende Erfindung betrifft ein Verfahren zur Bestimmung einer Oberflächenprofiländerung einer Füllmasse in einer Aussparung. Insbesondere befasst sich die vorliegende Erfindung mit der Bestimmung der Oberflächenprofiländerung von Füllmassen in Fügeübergängen, Fügenuten, Nuten und/oder allgemeinen Aussparungen in Strukturen von Luft- oder Raumfahrzeugen.

Obwohl in vielfältigen Anwendungen zur Untersuchung von mit Füllmasse gefüllten und/oder geglätteten Fügeübergängen bzw. Aussparungen unterschiedlichster Strukturen verwendbar, werden die vorliegende Erfindung sowie die ihr zugrunde liegende Problematik in Bezug auf Anwendungen im Bereich von Flugzeugflügeln näher erläutert. Prinzipiell ist die vorliegende Erfindung jedoch auch zur Bestimmung von Oberflächenprofiländerungen von gefüllten Fügeübergängen, Fügenuten bzw. Nuten in allgemeinen Fahrzeugen, wie Straßenfahrzeugen, Schienenfahrzeugen und/oder Wasserfahrzeugen oder dergleichen verwendbar.

Eine zentrale Herausforderung des modernen Flugzeugbaus ist die Gestaltung von effizienten Luftfahrzeugen, welche einen möglichst geringen Treibstoffverbrauch und damit verbundenen Schadstoffausstoß aufweisen. Zu diesem Zweck wird intensiv erforscht, wie verbesserte Flügel zu einem umweltschonenderen Flugverkehr beitragen können. So wird insbesondere der Strömungswiderstand eines Flugzeugs ganz entscheidend von dem spezifischen, geschwindigkeitsabhängigen Strömungsverlauf der Luft über den Oberflächen der Flugzeugtragflächen beeinflusst. Je gleichmäßiger diese Strömung verläuft, desto geringer ist der Widerstand. Ein geringer Luftwiderstand reduziert wiederum den Treibstoffverbrauch, die Emission von Schadstoffen und damit auch die Energiekosten. Ein verfolgter Ansatz besteht somit darin, Flügelkonstruktionen dahingehend zu optimieren, dass eine gleichmäßige, d.h. laminare, Strömung auf Dauer gehalten werden kann, ohne dass Turbulenzen auftreten, welche wieder zu einem erhöhten Luftwiderstand führen würden.

Zu diesem Zweck ist es vorteilhaft, die Oberflächen der Tragflächen und insbesondere die zur Flugrichtung gerichteten Flügelseiten so glatt wie möglich zu gestalten. Bereits kleinste Unebenheiten an den Oberflächen aufgrund von Schmutz, Montage- und/oder Lackierungsungenauigkeiten können einen laminare Strömung am Flügel beeinflussen. Ansätze für so genannte laminare Flügel weisen eine feste Flügelvorderkante auf, die fest mit einem Flügelkasten verbunden ist. Bei der Anbindung einer solchen Flügelvorderkante an den Flügelkasten entsteht ein Fügeübergang, der möglichst eben mit einer Füllmasse aufgefüllt werden sollte, um geeignete Voraussetzungen für das Halten einer laminaren Strömung zu erfüllen.

Allgemein werden zur passgenauen Montage von Flugzeugbauteilen Hilfsstoffe wie Füllmassen (Glättung von Übergängen bzw. Nuten), flächige Ausgleichsmassen (so genannte Shim-Massen) und Klebstoffschichten sehr genau hinsichtlich ihrer Dicke aufgetragen. Typischerweise werden diese Montageprozesse unter Raumtemperatur bzw. höheren Temperaturen durchgeführt. Unter üblichen Reiseflugbedingungen von Passagierflugzeugen werden jedoch Umgebungstemperaturen von weit unter -50 °C erreicht, so dass mitunter eine beträchtliche thermische Schrumpfung der Hilfsstoffe zu erwarten ist. Eine Unkenntnis bzw. eine Nichtberücksichtung einer solchen thermischen Schrumpfung in der Montage kann jedoch zu Unebenheiten auf den Oberflächen der Flugzeugbauteile, z.B. der Flügeloberfläche, führen, welche wiederum das Strömungsverhalten des Flugzeugs auf der Reisehöhe beeinflussen können.

Darüber hinaus unterliegen insbesondere Fügeübergänge an der Flügelaußenhaut mechanischen Kräften, die die Füllmassen in den jeweiligen Übergängen bzw. Nuten stauchen und/oder dehnen können, d.h. insbesondere auch schrumpfen können, und dadurch Volumenumlagerungen bewirken können. Das Oberflächenprofiländerungsverhalten der Füllmassen ist hierbei von dem Querschnitt, d.h. der Geometrie, der gefüllten Nuten abhängig. Es besteht somit ein Bedarf nach applikations- und operationsnahen Prüfverfahren, welche eine thermisch- und/oder mechanisch bedingte Oberflächenprofiländerung über einen weiteren Temperaturbereich bei fortgeschrittenen Aushärtegraden der Füllmassen charakterisieren können.

Beispielsweise kann die lineare thermische Ausdehnung einer Probe als Funktion der Temperatur mit dilatometrischen Messungen untersucht werden und daraus ein Längenausdehnungskoeffizient einer Füllmassenprobe gewonnen werden. Für komplexe Nutgeometrien kann hieraus jedoch nur unzureichend auf die Volumenänderung der Probe geschlossen werden. Prinzipiell kann ein Füllmassenausgangsprofil bei Raumtemperatur bestimmt werden. Zusammen mit dem gemessenen Längenausdehnungskoeffizient kann die thermische Schrumpfung auf dieser Basis grundsätzlich zwar simuliert werden. Allerdings müssen hierzu Annahmen hinsichtlich der Geometrie der Fügenut einbezogen werden, wobei komplexe Wechselwirkungen nur bedingt berücksichtigt werden können.

Vor diesem Hintergrund liegt der vorliegenden Erfindung die Aufgabe zugrunde, Lösungen zur Bestimmung einer Oberflächenprofiländerung von Füllmassen zu finden, welche eine genaue und dennoch einfache Ermittlung der Oberflächenprofiländerung auch bei tiefen Temperaturen ermöglichen.

Erfindungsgemäß wird diese Aufgabe gelöst durch ein Verfahren mit den Merkmalen des Patentanspruchs 1.

Demgemäß ist ein Verfahren zur Bestimmung einer Oberflächenprofiländerung einer Füllmasse in einer Aussparung vorgesehen. Das Verfahren umfasst Ermitteln eines ersten Oberflächenprofils einer Oberfläche der Füllmasse über die Aussparung hinweg bei einer Ausgangstemperatur. Das Verfahren umfasst ferner Abkühlen oder Erwärmen der Aussparung mit der Füllmasse auf eine vorgegebene Messtemperatur. Das Verfahren umfasst ferner Ermitteln eines zweiten Oberflächenprofils der Oberfläche der Füllmasse über die Aussparung hinweg bei der Messtemperatur. Das Verfahren umfasst ferner Vergleichen des zweiten Oberflächenprofils mit dem ersten Oberflächenprofil zur Bestimmung der Oberflächenprofiländerung.

Ferner ist eine Verwendung des erfindungsgemäßen Verfahrens zur Bestimmung einer Oberflächenprofiländerung einer Füllmasse in einer Aussparung in einer Struktur und/oder zwischen Strukturen, insbesondere Flügelstrukturen, eines Luftoder Raumfahrzeugs vorgesehen.

Die der vorliegenden Erfindung zugrunde liegende Idee besteht darin, eine Oberflächenprofiländerung der Füllmasse bzw. eine Abweichung der Füllmasse von einer geforderten Glätte bzw. einem geforderten Profilverlauf direkt an der jeweilig vorgesehenen, mit Füllmasse gefüllten Aussparung für unterschiedliche Temperaturen zu bestimmen. Der allgemeine Begriff der Aussparung im Sinne der Erfindung umfasst hierbei unter anderem Fügeübergänge, Fügenuten und/oder Nuten zwischen Fügepartnern bzw. Fügebauteilen und/oder ähnliche zu füllende bzw. glättende Oberflächenunebenheiten (z.B. Einglättung von Dellen, Einsackungen einer Flügelhaut im Bereich von Stringern mit Einglättmasse oder bei Reparaturen). Ferner umfasst eine Aussparung im Sinne der Erfindung jedoch auch allgemeine Vertiefungen in Bauteilen.

Hierzu kann das Oberflächenprofil der Oberfläche der Aussparung entlang einer Linie abgefahren werden, beispielsweise mit einer Diamantnadel eines taktilen Messgerätes oder mit einem Laser einer optischen Messvorrichtung (grundsätzlich sind auch flächige Messungen entsprechend möglich). Hierbei kann beispielsweise eine Oberflächenprofilhöhe der Oberfläche relativ zu einer Referenzfläche bzw. Referenzhöhe, z.B. einer seitlichen Berandung der Aussparung, gemessen werden als Funktion einer Messposition quer zu der Aussparung. Das hieraus erhaltene Oberflächenprofil als Funktion der Temperatur hängt unmittelbar mit dem Oberflächenprofiländerungsverhalten der Füllmasse in der Aussparung zusammen. Ein Vergleich der Oberflächenprofile bei unterschiedlichen Temperaturen macht direkte Rückschlüsse auf die Oberflächenprofiländerung (in Bezug auf die Referenzfläche bzw. Referenzhöhe) möglich. Beispielsweise kann hierzu eine Differenz zweier Oberflächenprofile gebildet werden und das Ergebnis als Maß für die Oberflächenprofiländerung dienen. In einem anderen Beispiel können auch ein Gradient oder höhere Ableitungen der Oberflächenprofile bezüglich der Messposition in Abhängigkeit von der Temperatur ermittelt werden. Darüber hinaus können die so gewonnen Oberflächenprofile jedoch auch mittels komplexerer Verfahren bzw. Methoden analysiert werden, um detaillierte Informationen über die Oberflächenprofiländerung in Abhängigkeit von Ort und/oder Temperatur und/oder anderen Parametern bzw. Variablen zu bestimmen. Das erfindungsgemäße Verfahren ist insbesondere auf kryogene Temperaturen anwendbar, d.h. z.B. Temperaturen von flüssigem Stickstoff oder dergleichen.

Je nach Anwendung kann es ausreichend sein, ein Oberflächenprofil der Oberfläche lediglich bei zwei unterschiedlichen Temperaturen aufzunehmen. Prinzipiell können solche Messungen jedoch beliebig oft und bei einer Vielzahl von unterschiedlichen Temperaturen durchgeführt werden, um eine detailliertes Bild über das Oberflächenprofiländerungsverhalten einer Füllmasse in einer bestimmten Aussparungsgeometrie zu erhalten. Die Messungen können vorteilhafterweise an ein und derselben Position bzw. Stelle in eine Längsrichtung des Fügeübergangs bzw. der Aussparung quer zur Nut ausgeführt werden (grundsätzlich sind jedoch auch andere Richtungen als die Querrichtung möglich, insbesondere auch in einem bestimmten Winkel zur Nut-Längsrichtung). Grundsätzlich ist es jedoch auch vorgesehen, Messungen an unterschiedlichen Positionen in der Längsrichtung des Fügeübergangs durchzuführen. Wiederholte Messungen können ferner bei gleichen und/oder unterschiedlichen Temperaturen vorgesehen sein, um eine Oberflächenprofiländerung als Funktion der Zeit zu erhalten. Darüber hinaus können mit Hilfe solcher Messungen unterschiedliche Füllmaterialien und/oder unterschiedliche Nutgeometrien miteinander einfach verglichen werden. Im Falle der vorliegenden Erfindung wird die Oberflächenprofiländerung direkt und ohne irgendwelche Näherungen oder Annahmen gemessen, anders als zum Beispiel im Falle von eindimensionalen, dilatometrischen Messungen der Längenkontraktion, bei welchen ergänzende Simulationen auf Basis von eventuell nicht genau konkretisierbaren Annahmen benötigt werden. Somit können mit der erfindungsgemäßen Lösung auch komplexe Nutgeometrien realitätsnah und präzise auf ihr Schrumpfverhalten untersucht werden. Es können verschiedenste Materialien sowohl als Füllmaterialien als auch als Fügepartner/Fügebauteil verwendet werden.

Füllmassen im Sinne der Erfindung umfassen unter anderem auch Kleber, Ausgleichsmassen (Shim-Massen), Anstrichmittel, Lacke bzw. Füllerschichten oder ähnliche Materialien wie mit Metall- und / oder Keramikpartikeln gefüllte Füllmassen. Die Fügepartner können aus Kunststoff, Metall und/oder Keramik oder einer Materialverbindung von diesen bestehen. Weiter kann der Fügeübergang z.B. eine durch Reibrührschweißen hergestellte Verbindung oder ein vernieteter Fügeübergang sein (z.B. über Nietköpfe messen, um thermische Auswirkungen zu erhalten). Das erfindungsgemäße Verfahren bietet Vorteile insbesondere in bzw. auf Fügebereichen oder wo immer Oberflächenrauheiten bzw. -welligkeiten oder andere Unebenheiten mit solchen oder ähnlichen Materialien definiert eingeglättet werden. Bei Temperaturwechsel, durch Alterung und/oder unter mechanischen Belastungen kann eine Oberflächenprofiländerung (Schrumpfung bzw. Stauchung) dieser so behandelten bzw. hergestellten Oberflächen resultieren und es können dadurch Abweichungen von einer geforderten Glätte entstehen.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann das erste Oberflächenprofil und/oder das zweite Oberflächenprofil mit einer taktilen Profilmessung und/oder einer optischen Profilmessung ermittelt werden. Beispielsweise kann die Oberfläche der Füllmasse hierbei mit einer Diamantnadel derart abgefahren werden, dass die Nadelspitze direkt mit der Oberfläche in Kontakt tritt. Aus der vertikalen Lageverschiebung der Nadelspitze kann dann auf das Oberflächenprofil der Füllmasse geschlossen werden. Die hierbei zum Einsatz kommenden Messgeräte werden auch als taktile, d.h. berührende, Profilometer bezeichnet. Alternativ oder zusätzlich können jedoch auch optische Messverfahren und insbesondere berührungslose Verfahren zum Einsatz kommen, wie beispielsweise laserbasierte Verfahren, Konfokaltechnik, Weißlichtinterferometrie und ähnliche dem Fachmann bekannte Verfahren zur Erstellung eines Oberflächenprofils eines Oberflächenverlaufs. Beispielsweise kann die Oberfläche mit einem Laser abgefahren bzw. abgetastet werden, z.B. im Sinne eines Laserscanners oder Linienscanners. Beispielsweise kann mittels optischer Sensoren über die (De-)Fokussierung eines Laserstrahles auf den Verlauf einer Oberfläche bzw. die Strukturierung einer Oberfläche geschlossen werden, z.B. mittels Laserprofilometrie.

Gemäß einer Weiterbildung kann das erste Oberflächenprofil und/oder das zweite Oberflächenprofil unter einer mechanischen Belastung der Aussparung mit einer Zugspannung, einer Druckspannung und/oder einer Schubspannung ermittelt werden. Eine mechanische Belastung der mit Füllmasse gefüllten Aussparung auf Torsion und/oder Biegung ist möglich. Neben der thermischen Oberflächenprofiländerung können in dieser Weiterbildung folglich auch Erkenntnisse über die mechanisch bedingte Oberflächenprofiländerung der Füllmasse in der Aussparung gewonnen werden und damit insbesondere Aussagen gemacht werden, wie sich bestimmte Nutgeometrien mit bestimmten Füllmaterialien unter vorgegebenen mechanischen Belastungen verhalten. Dies schließt insbesondere auch viskoelastisches Verhalten, d.h. "Kriechen", ein. Insbesondere kann somit der Einfluss von mechanischen Belastungen, beispielsweise einem Auseinanderziehen oder Zusammenpressen der Fügepartner/Fügebauteile, auf das Oberflächenprofiländerungsverhalten der Füllmassen ermittelt werden. Mit Hilfe der vorliegenden Verfahren können folglich Vorhersagen über das zu erwartende Verhalten bestimmter Nutgeometrien und Füllmaterialien unter realistischen Einsatzbedingungen hinsichtlich Temperaturbelastung und mechanischen Belastungen jeder Art erstellt werden.

Gemäß einer Weiterbildung kann das Verfahren Auffüllen der Aussparung mit der Füllmasse umfassen. Prinzipiell kann das Auffüllen der Aussparung beispielsweise mit in einem Extrusionsverfahren und/oder einem Spritzgussverfahren durchgeführt werden. Das Verfahren kann ferner teilweise oder vollständiges Aushärten der Füllmasse in der Aussparung umfassen, so dass die Füllmasse eine der Anwendung entsprechende ausreichende Härte aufweisen kann. Gemäß einer Weiterbildung kann das Auffüllen der Aussparung mit der Füllmasse das Glätten der Oberfläche der Füllmasse umfassen. Mit diesem Schritt wird demnach sichergestellt, dass die Oberfläche der Füllmasse vor der Beaufschlagung einer mechanischen Last bzw. vor einer Temperaturänderung genau bekannt ist, so dass die in folgenden Schritten erhaltenen Oberflächenprofile möglichst gut kontrolliert werden und präzise Aussagen getroffen werden können. Ein Glätten der Oberfläche kann je nach Auffüllungsverfahrenjedoch auch überflüssig sein, z.B. im Falle eines Spritzgussverfahrens. Grundsätzlich kann zudem auch direkt eine Bauteilanordnung mit bereits gefüllter Aussparung verwendet werden, wobei die Füllmasse bereits teilweise oder vollständig ausgehärtet sein kann. Beispielsweise kann ein Teil von einem Flugzeugbauteil "herausgesägt" werden und auf sein Verhalten bei unterschiedlichen Temperaturen untersucht werden.

Gemäß einer Weiterbildung kann die Füllmasse bei der Ausgangstemperatur in der Aussparung teilweise oder vollständig ausgehärtet werden. Beispielsweise kann die Aussparung bei Raumtemperatur montiert werden und mit einer Füllmasse befüllt werden. Im Anschluss wird zuerst die Füllmasse ausgehärtet, bevor die Temperatur abgesenkt wird und eine Messung bei einer niedrigeren Temperatur durchgeführt wird. Hiermit wird sichergestellt, dass Volumenänderungen aufgrund von chemischen Aushärtungseffekten keinen Einfluss auf die folgenden Messungen haben.

Gemäß einer Weiterbildung kann die Aussparung mit der Füllmasse mittels einer Stickstoffkühlung abgekühlt werden, d.h. die Kühlung kann zum Beispiel auf Basis von Stickstoff bzw. Flüssigstickstoff (LN₂) erfolgen. Prinzipiell kann hier aber jede andere bekannte und zu dem Zweck bzw. für den gewünschten Temperaturbereich geeignete Kühl- oder Wärmetechnologie verwendet werden. Insbesondere kann flüssiges und/oder verdampftes bzw. gasförmiges Kühlmittel und/oder Wärmemittel Verwendung finden.

Gemäß einer Weiterbildung kann die Aussparung als Fügeübergang zwischen Fügebauteilen oder als Vertiefung in einem Bauteil gebildet werden.

Gemäß einer Weiterbildung kann die Aussparung zwischen Fügebauteilen aus Aluminium und/oder kohlefaserverstärktem Kunststoff (CFK) gebildet werden. Prinzipiell kann die Aussparung jedoch auch alternativ als Vertiefung in einem Bauteil gebildet sein. Grundsätzlich sind auch andere Metalle, Metalllegierungen, Keramiken und/oder Faserverbundwerkstoffe (bzw. Kunststoffe) vorgesehen (Verbindungen unterschiedlicher Materialien können sowohl im Bauteil als auch in der Füllung vorgesehen sein). Beispielsweise können diese Fügebauteile oder Fügepartner Strukturen eines Luft- oder Raumfahrzeugs bzw. deren Oberflächen entsprechen. Beispielsweise kann eine Aussparung zwischen zwei aneinander angrenzenden bzw. aufeinander aufliegenden Aluminium- und/oder CFK-Bauteilen gebildet werden. Beispielsweise können die beiden Fügebauteile Flügelstrukturen eine Flugzeugs entsprechen, welche aus einem Metall, einer Metalllegierung und/oder einem Faserverbundwerkstoff gebildet sein können.

Gemäß einer Weiterbildung kann eine mechanischen Belastung der Aussparung (und somit der Füllmasse) mit einer Zugspannung, einer Druckspannung und/oder einer Schubspannung durch Schraubenvorspannen der Fügebauteile aufgebaut werden. Eine mechanische Belastung der mit Füllmasse gefüllten Aussparung auf Torsion und/oder Biegung ist möglich. Die Schraubenvorspannung kann weg- oder kraftgesteuert (Dehnmessstreifen) sein. Beispielsweise kann eines der Fügebauteile, zwischen denen die Aussparung gebildet wird, mittels einer Schraube verstellbar eingespannt sein, so dass das Fügebauteil quer zur Aussparung belastbar ist, um eine Zugspannung oder Druckspannung auf die Aussparung zu erzeugen. In diesem Fall kann die mechanische Belastung besonders einfach durch simples Verstellen einer Schraube, z.B. einer Flügelschraube, variiert und angepasst werden. Alternativ oder zusätzlich können hier jedoch auch andere dem Fachmann bekannte, mechanische, elektrische oder elektromechanische Lösungen zum Einsatz kommen, wie beispielsweise Piezomotoren, Schrittmotoren oder dergleichen. Ebenso können mechanische Belastungen durch hydraulische und/oder pneumatische Vorrichtungen erzeugt werden. Die Längenänderung der bewegten Fügepartner kann zusätzlich mit der (taktilen) Messung erfasst werden.

Gemäß einer Weiterbildung können die Fügebauteile mit der dazwischenliegenden Aussparung oder das Bauteil mit der Aussparung in eine Kühlplatte eingesetzt werden. Dies macht das vorliegende Verfahren bzw. den Messaufbau für ein Verfahren gemäß der vorliegenden Erfindung besonders einfach. Die Kühlplatte kann entsprechend einfach auf die gewünschte Temperatur runtergekühlt bzw. erwärmt werden, wodurch sich die Temperatur der Aussparung bzw. der Fügebauteile automatisch entsprechend anpasst (mit einem gewissen Temperaturgradienten). Gleichzeitig kann eine Vorrichtung für die Erzeugung einer mechanischen Belastung ebenfalls auf der Kühlplatte installiert werden, so dass die Temperatur der Kühlplatte letztendlich die Temperatur des Messaufbaus regelt.

Gemäß einer Weiterbildung kann eine Kühlflüssigkeit und/oder ein gekühltes Gas, insbesondere Stickstoff, durch die Kühlplatte zum Abkühlen der Aussparung geleitet werden. Beispielsweise kann die Kühlplatte hierzu eine Kühllanze oder dergleichen umfassen, durch welche temperierter, verdampfter Stickstoff geleitet werden kann.

Gemäß einer Weiterbildung kann die Aussparung zusammen mit den Fügebauteilen oder zusammen mit dem Bauteil gekühlt werden. In dieser Weiterbildung kann somit ein ganze Bauteilanordnung zusammen mit der darin befindlichen mit Füllmasse gefüllten Aussparung gekühlt werden. Hierdurch ist es möglich, das Verhalten eines ganzen Bauteils mit Füllmasse unter realitätsnahen Bedingungen zu untersuchen.

Gemäß einer Weiterbildung kann eine Schraubenspannvorrichtung zur mechanischen Belastung der Fügebauteile in die Kühlplatte integriert sein. Die Schraubenspannvorrichtung kann mitgekühlt werden. In dieser Weiterbildung kann ein Messaufbau besonders kompakt und praktisch in die Kühlplatte integriert werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1a,1b,1c: schematische Querschnittsansichten bzw. Perspektivansichten von Fügebauteilen mit einer dazwischen gebildeten Aussparung zur Verwendung in einem erfindungsgemäßen Verfahren gemäß einer Ausführungsform der Erfindung;
- Fig. 2: eine schematische Perspektivansicht einer Kühlplatte mit darin integrierten Fügebauteilen entsprechend Fig. 1a zur Verwendung in einem erfindungsgemäßen Verfahren gemäß einer weiteren Ausführungsform der Erfindung;
- Fig. 3: eine schematische Ansicht eines Messaufbaus mit der Kühlplatte aus Fig. 2 zur Verwendung in einem erfindungsgemäßen Verfahren gemäß einer weiteren Ausführungsform der Erfindung;
- Fig. 4: ein schematisches Ablaufdiagramm eines erfindungsgemäßen Verfahren gemäß einer weiteren Ausführungsform der Erfindung unter Verwendung des Messaufbaus in Fig. 3;
- Fig. 5: eine schematische Querschnittsansicht von Fügebauteilen mit einer mit Füllmasse gefüllten Aussparung und Messergebnisse einer Oberflächenprofiländerung der Füllmasse in der Aussparung mit einem Verfahren gemäß Fig. 4; und
- Fig. 6: eine schematische Querschnittsansicht von Fügebauteilen mit einer mit Füllmasse gefüllten Aussparung und Messergebnisse einer Oberflächenprofiländerung der Füllmasse in der Aussparung mit einem alternativen Verfahren gemäß Fig. 4.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

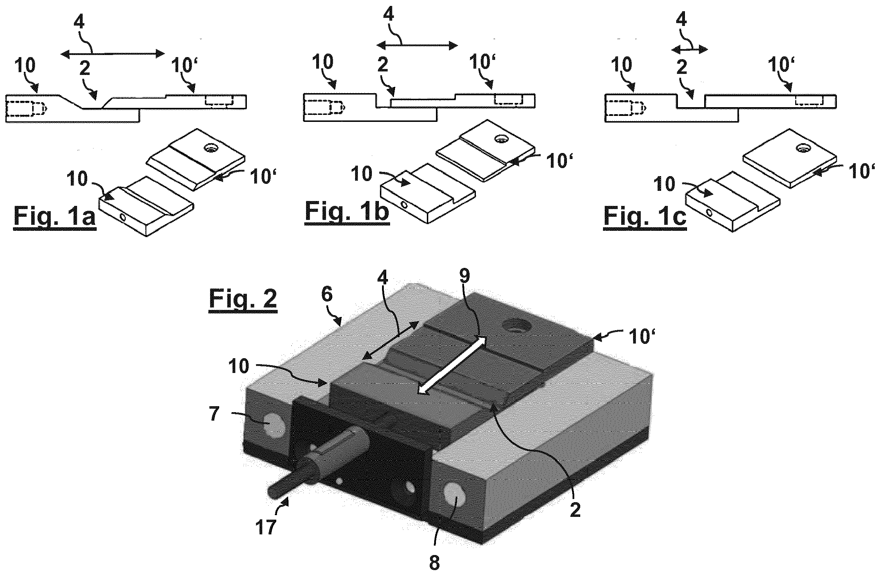

Fig. 1a, 1b, 1c zeigen schematische Querschnittsansichten bzw. Perspektivansichten von Fügebauteilen mit einer dazwischen gebildeten Aussparung zur Verwendung in einem erfindungsgemäßen Verfahren gemäß einer Ausführungsform der Erfindung.

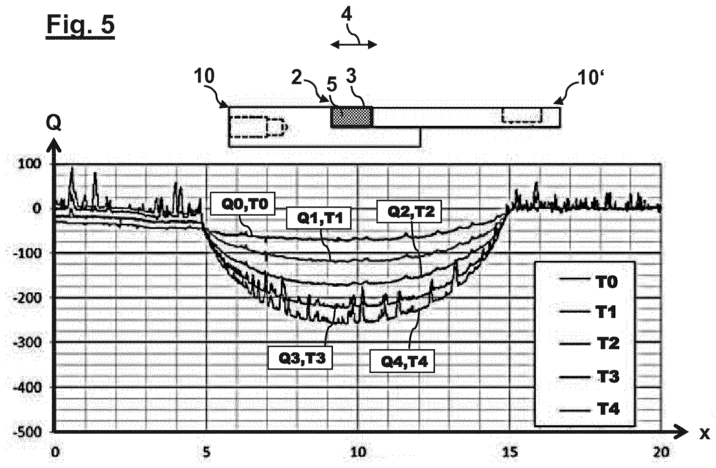

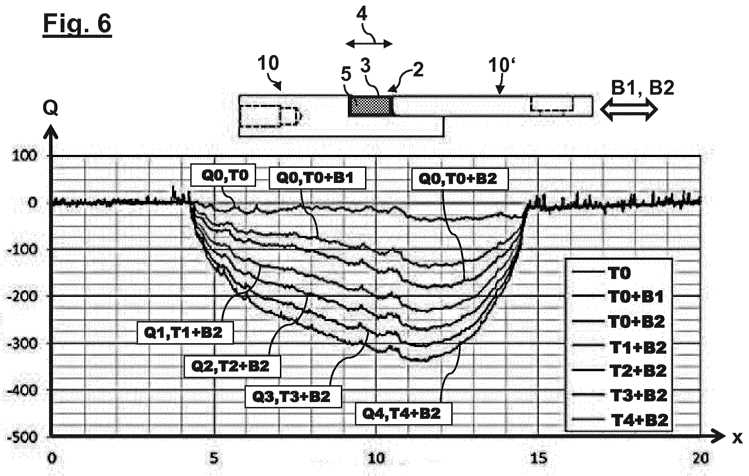

In Fig. 1a, 1b, 1c bezeichnet das Bezugszeichen 10 bzw. 10'jeweils ein Fügebauteil. Die beiden Fügebauteile 10, 10' können wie in den Figuren ersichtlich aneinander gelegt werden, wodurch zwischen ihnen ein Fügeübergang bzw. eine Aussparung 2 mit einer bestimmten Nutbreite 4 gebildet wird. Prinzipiell kann es sich bei den beiden Fügebauteilen 10, 10' bzw. Fügepartnern um beliebige Bauteile bzw. Strukturen handeln. Prinzipiell sind überdies unterschiedliche Materialien für die Fügebauteile 10, 10' vorgesehen. Beispielsweise können diese aus einem Metall, einer Metalllegierung oder einem Verbundmaterial, z.B. einem Faserverbundmaterial, geformt sein. Insbesondere können die Fügebauteile 10, 10' aus Aluminium und/oder faserverstärktem Kunststoff, z.B. kohlefaserverstärktem Kunststoff (CFK), bestehen. Die Fügebauteile 10, 10' können beispielsweise Abschnitten von Strukturen oder Oberflächen eines Luft- oder Raumfahrzeugs entsprechen. Zum Beispiel können diese Flügelstrukturen bzw. Flügeloberflächenabschnitte eines laminaren Flugzeugflügels darstellen, wobei ein Fügebauteil 10 beispielsweise einem Abschnitt einer festen Flügelvorderkante entsprechen kann, welche fest mit einer zweiten Flügelstruktur, z.B. einem Flügelkasten, verbunden ist, welche durch das andere Fügebauteil 10' dargestellt wird. Bei der Anbindung einer solchen Flügelvorderkante an den Flügelkasten kann eine Aussparung 2 entstehen, wie sie schematisch in Fig. 1a, 1b, 1c abgebildet ist. Um geeignete Voraussetzungen für das Halten einer laminaren Strömung zu erfüllen, sollte eine solche Aussparung 2 möglichst präzise mit einer Füllmasse 5 aufgefüllt werden (vgl. Fig. 5 und 6). Gleichzeitig sollte das Verhalten der Füllmasse in der Aussparung 2 unter mechanischen und/oder thermischen Einflüssen bekannt und kontrolliert sein. So ist eine thermische Oberflächenprofiländerung der Füllmasse 5, welche bei Raumtemperatur in eine Aussparung 2 eingefüllt wurde und in dieser ausgehärtet wurde, unter den üblichen Umgebungstemperaturen von Passagierflugzeugen von unter -50°C zu erwarten. Eine Vernachlässigung einer solchen thermischen Oberflächenprofiländerung in der Montage kann zu Unebenheiten auf den Oberflächen der Flugzeugbauteile, z.B. der Flügeloberfläche, führen, welche wiederum das Strömungsverhalten des Flugzeugs auf der Reisehöhe beeinflussen können. Ferner sind solche gefüllten Aussparungen im Betrieb des Flugzeugs mechanischen Belastungen ausgesetzt, welche ebenfalls Einfluss auf die Oberflächenprofiländerung der Füllmasse 5 haben können. Die in Verbindung mit den folgenden Figuren detailliert erläuterten Verfahren ermöglichen eine Bestimmung einer Oberflächenprofiländerung von Füllmassen 5, welche auch bei tiefen Temperaturen ohne Aufwände oder Verlust an Präzision durchführbar ist. Dem Fachmann wird ersichtlich sein, dass die in Fig. 1a, 1b, 1c dargestellten Fügebauteile 10, 10' und Aussparungen 2 rein beispielhafter Natur sind und nur zur Veranschaulichung der grundlegenden Prinzipien der Erfindung dienen. Vielfältige andere Bauteilgeometrien sind ohne weiteres ebenfalls mit den Verfahren gemäß der Erfindung messbar.

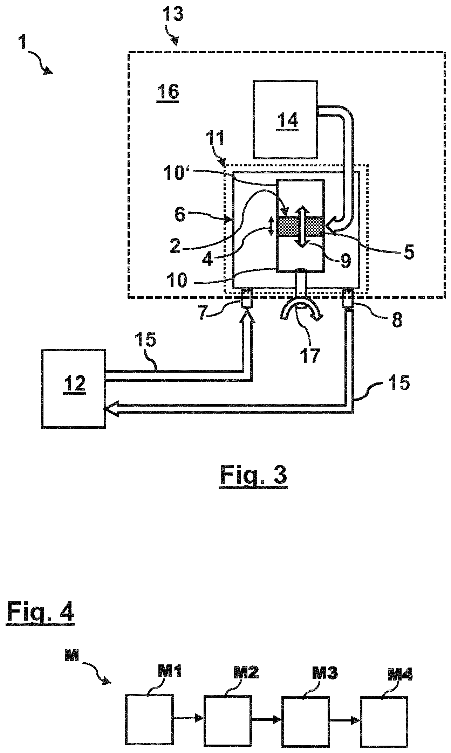

Fig. 2 zeigt eine schematische Perspektivansicht einer Kühlplatte 6 mit darin integrierten Fügebauteilen 10, 10' entsprechend Fig. 1a zur Verwendung in einem erfindungsgemäßen Verfahren gemäß einer weiteren Ausführungsform der Erfindung. Die Kühlplatte 6 kann hierzu mit einer Aufnahme versehen sein, in welche jeweils zwei Fügebauteile 10, 10' einsetzbar sind (in Fig. 2 angedeutet). In der beispielhaften Ausführungsform in Fig. 2 entsprechen die Geometrien der Fügebauteile 10, 10' und der zwischen diesen gebildeten Aussparung 2 dem Ausführungsbeispiel in Fig. 1a. Zumindest ein Fügebauteil 10 der beiden Fügebauteile 10, 10' wird durch eine Schraubenspannvorrichtung 17 gegen das andere Fügebauteile 10' gehalten. Durch Verstellung der Schraubenspannvorrichtung 17 kann eine mechanische Belastung der Aussparung 2 und einer darin eingebrachten Füllmasse 5 auf Zug oder Druck eingestellt werden, wie weiter unten näher erläutert werden wird. Die Kühlplatte 6 ist mit einer Stickstoffkühlung 12 verbunden (vgl. Fig. 3), z.B. auf Basis von kryoverdampftem Stickstoff, über welche temperierter Stickstoff 15 als Gas durch die Kühlplatte 6 zur Kühlung dieser und der darauf befindlichen Fügebauteile 10, 10' sowie der Füllmasse 5 in der Aussparung 2 leitbar ist. Hierzu weist die Kühlplatte 6 einen Kühlmittel-Einlass 7 und einen Kühlmittel-Auslass 8 auf. Prinzipiell können hierbei neben Stickstoff auch weitere geeignete flüssige und/oder verdampfte bzw. gasförmige Kühlmittel und/oder Wärmemittel zum Einsatz kommen.

Fig. 3 zeigt eine schematische Ansicht eines Messaufbaus 1 mit der Kühlplatte 6 aus Fig. 2 zur Verwendung in einem erfindungsgemäßen Verfahren gemäß einer weiteren Ausführungsform der Erfindung. In Fig. 3 sind wie in Fig. 2 zwei Fügebauteile 10, 10' in die Kühlplatte 6 eingesetzt worden, um eine Aussparung 2 mit einer Nutbreite 4 zwischen diesen zu bilden. Die Aussparung 2 ist in Fig. 3 mit einer darin befindlichen Füllmasse 5 dargestellt. In diesem beispielhaften Messaufbau 1 ist die Kühlplatte 6 kompakt thermisch isoliert worden, indem diese bis auf einen kleinen freibleibenden streifenförmigen Messbereich 9 in ein Isoliermaterial 11 eingepackt wurde. Beispielsweise kann das Isoliermaterial 11 ein Polystyrol-Hartschaum oder ein anderer geeigneter Dämmstoff sein. Der Messbereich 9 ist einem Profilometer 14 zugänglich, welches beispielsweise ein taktiles Profilmessgerät sein kann. Das Profilometer 14 kann demnach dazu ausgebildet sein, mit Hilfe einer Diamantnadel (nicht abgebildet) ein Oberflächenprofil der Füllmasse 5 in der Aussparung 2 abzutasten und zu vermessen. Hierzu kann die Diamantnadel den streifenförmigen Messbereich 9 entlangfahren. Der genau Ablauf eines solchen Messverfahrens wird weiter unten in Verbindung mit Fig. 4 erläutert.

Die Kühlplatte 6 ist wie in Fig. 2 gezeigt mit einem Kühlmittel-Einlass 7 und einem Kühlmittel-Auslass 8 ausgebildet, durch welche kontinuierlich Stickstoff 15 über eine Stickstoffkühlung 12 geleitet werden kann, um die Kühlplatte 6 zusammen mit den darauf befindlichen Fügebauteilen 10, 10' und der mit Füllmasse 5 gefüllten Aussparung 2 abzukühlen. Um das Bilden von Eiskristallen entlang des Messbereichs 9 zu verhindern, wurde die Kühlplatte 6 mit der Isolierung in dem beispielhaften Messaufbau 1 in Fig. 3 weiterhin mit einer Box 13 umgeben, welche mit einem trockenen Gas, z.B. temperiertem Stickstoff 16 oder Argon, beispielsweise unter Raumtemperatur, gefüllt ist.

Fig. 4 zeigt ein schematisches Ablaufdiagramm eines erfindungsgemäßen Verfahren M gemäß einer weiteren Ausführungsform der Erfindung unter Verwendung des Messaufbaus 1 in Fig. 3. Das Verfahren M dient zur Bestimmung einer Oberflächenprofiländerung der Füllmasse 5 in der Aussparung 2. Hierzu kann das Verfahren M Auffüllen der Aussparung 2 mit der Füllmasse 5 und teilweise oder vollständiges Aushärten der Füllmasse 5 in der Aussparung 2 umfassen. Beispielsweise kann die Füllmasse 5 bei einer Ausgangstemperatur T0 in die Aussparung 2 eingefüllt werden und bei dieser Temperatur ebenfalls in der Aussparung 2 ausgehärtet werden. Beispielsweise kann die Ausgangstemperatur T0 einer typischen Raumtemperatur entsprechen, z.B. kann T0 = 23 °C gelten. Ferner kann das Auffüllen der Aussparung 2 unter M1 zusätzlich ein Glätten der einer Oberfläche 3 der Füllmasse 5 in der Aussparung 2 beinhalten. Grundsätzlich kann jedoch auch direkt eine Bauteilanordnung mit bereits gefüllter Aussparung 2 verwendet werden, wobei die Füllmasse 5 bereits teilweise oder vollständig ausgehärtet sein kann.

Unter M1 umfasst das Verfahren M anschließend Ermitteln eines ersten Oberflächenprofils Q0 der Oberfläche 3 der Füllmasse 5 quer über die Aussparung 2 hinweg bei der Ausgangstemperatur T0. Danach umfasst das Verfahren M unter M2 Abkühlen oder Erwärmen der Aussparung 2 mit der Füllmasse 5 auf eine vorgegebene Messtemperatur T1, T2, T3, T4. Hiernach sieht das Verfahren M unter M3 Ermitteln eines zweiten Oberflächenprofils Q1, Q2, Q3, Q4 der Oberfläche 3 der Füllmasse 5 quer über die Aussparung 2 hinweg bei der Messtemperatur T1, T2, T3, T4 vor. Ferner sieht das Verfahren M unter M4 Vergleichen des zweiten Oberflächenprofils Q1, Q2, Q3, Q4 mit dem ersten Oberflächenprofil Q0 zur Bestimmung der Oberflächenprofiländerung vor. Sowohl das erste Oberflächenprofil Q0 als auch das zweite Oberflächenprofil Q1, Q2, Q3, Q4 kann unter einer mechanischen Belastung B1, B2 der Aussparung 2 mit einer Zugspannung oder einer Druckspannung gemessen werden. Hierzu kann die Schraubenspannvorrichtung 17 durch Verstellen einer entsprechenden Schraube eine Zug- oder Druckspannung auf die Fügebauteile 10, 10' und die mit Füllmasse 5 gefüllte Aussparung 2 erzeugen. Die Oberflächenprofile Q0, Q1, Q2, Q3, Q4 werden hierbei jeweils von dem taktilen Profilometer 14 gemessen, indem dieses die Oberfläche 3 der Aussparung 2 mit einer Diamantnadel entlang des Messbereichs 9 quer zu der Aussparung 2 abtastet.

Grundsätzlich kann das Verfahren viele unterschiedliche zweite Oberflächenprofile Q1, Q2, Q3, Q4 bei unterschiedlichen Messtemperaturen T1, T2, T3, T4 vermessen. Hierzu können die Schritte des Abkühlens oder Erwärmens unter M2 und des Messens unter M3 mehrfach hintereinander ausgeführt werden. Beispielsweise kann die Ausgangstemperatur T0 einer Raumtemperatur entsprechen, z.B. T0 = 23 °C, und die Oberflächenprofiländerung der Füllmasse 5 in der Aussparung 2 für vier unterschiedliche Messtemperaturen T1, T2, T3, T4 gemessen werden, z.B. T1 = 0 °C, T2 = -20 °C, T3 = -40 °C und T4 = -55 °C. Entsprechend ergibt sich für jede Messtemperatur T1, T2, T3, T4 ein zugehöriges zweites Oberflächenprofil Q1, Q2, Q3, Q4: (Q1, T1), (Q2, T2), (Q3, T3), (Q4, T4) und (Q5, T5).

Fig. 5 zeigt eine schematische Querschnittsansicht von Fügebauteilen 10, 10' mit einer mit Füllmasse 5 gefüllten Aussparung 2 und Messergebnisse einer Oberflächenprofiländerung der Füllmasse 5 in der Aussparung 3, welche mit einem Verfahren M gemäß Fig. 4 erhalten wurden. Hierin sind das erste Oberflächenprofil Q0 für die Ausgangstemperatur T0 sowie die zweiten Oberflächenprofile Q1, Q2, Q3, Q4 für vier Messtemperaturen beispielhaft aufgetragen. Jedes Oberflächenprofil Q wird als Funktion der Messposition x entlang des streifenförmigen Messbereichs 9 entlang der Oberfläche 3 der Aussparung 2 dargestellt. Erwartungsgemäß ist eine deutliche (symmetrische) Oberflächenprofiländerung der Füllmasse 5 zu kälteren Temperaturen hin sichtbar.

Fig. 6 zeigt eine schematische Querschnittsansicht von Fügebauteilen 10, 10' mit einer mit Füllmasse 5 gefüllten Aussparung 2 und Messergebnisse einer Oberflächenprofiländerung der Füllmasse 5 in der Aussparung 2 mit einem alternativen Verfahren M gemäß Fig. 4. Im Unterschied zu Fig. 5 wurde in diesem Beispiel das erste Oberflächenprofil Q0 auch unter zwei beispielhaften mechanischen Belastungen B1, B2 gemessen. Hierzu wurde die Schraubenspannvorrichtung 17 entsprechend angepasst, um eine Zug- bzw. Druckspannung auf die Fügebauteile 10, 10' und die Aussparung 2 zu erzeugen (siehe Pfeil oben in Fig. 6). Entsprechend ergibt sich ein erstes Oberflächenprofil Q0 für die Ausgangstemperatur T0 ohne mechanische Belastung, (Q0, T0), als auch zwei weitere erste Oberflächenprofile Q0 für die Ausgangstemperatur T0 mit jeweiliger, unterschiedlicher mechanischer Belastung B1, B2: (Q0, T0+B1) und (Q0, T0+B2). Hierbei ist deutlich zu sehen, dass sich im Unterschied zu Fig. 5 eine asymmetrische Oberflächenprofiländerung der Füllmasse 5 in der Aussparung 2 einstellt. Entsprechend sind in Fig. 6 ferner vier unterschiedliche zweite Oberflächenprofile Q1, Q2, Q3, Q4 für vier unterschiedliche Messtemperaturen T1, T2, T3, T4 eingetragen, wobei jeweils eine bestimmte mechanische Belastung B2 eingestellt wurde. Ähnlich wie in Fig. 5 wird auch in diesem Fall die Oberflächenprofiländerung stärker für fallende Messtemperaturen T1, T2, T3, T4, wobei die Asymmetrie der mechanischen Belastung B2 jedoch in allen Fällen erhalten bleibt.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Messaufbau
- 2: Aussparung
- 3: Oberfläche
- 4: Nutbreite
- 5: Füllmasse
- 6: Kühlplatte
- 7: Kühlmittel-Einlass
- 8: Kühlmittel-Auslass
- 9: Messbereich
- 10, 10': Fügebauteil
- 11: Isolierung
- 12: Stickstoffkühlung
- 13: Box
- 14: Profilometer
- 15: Stickstoff
- 16: temperierter Stickstoff
- 17: Schraubenspannvorrichtung
- x: Messposition
- Q, Q0: Oberflächenprofil
- Q1, Q2, Q3, Q4: Oberflächenprofil
- T0: Ausgangstemperatur
- T1, T2, T3, T4: Messtemperatur
- B1, B2: mechanische Belastung
- M: Verfahren
- M1: Verfahrensschritt
- M2: Verfahrensschritt
- M3: Verfahrensschritt
- M4: Verfahrensschritt

## Patentansprüche

1. Verfahren (M) zur Bestimmung einer Oberflächenprofiländerung einer Füllmasse (5) in einer Aussparung (2), mit:
Ermitteln (M1) eines ersten Oberflächenprofils (Q0) einer Oberfläche (3) der Füllmasse (5) über die Aussparung (2) hinweg bei einer Ausgangstemperatur (T0);
Abkühlen oder Erwärmen (M2) der Aussparung (2) mit der Füllmasse (5) auf eine vorgegebene Messtemperatur (T1, T2, T3, T4);
Ermitteln (M3) eines zweiten Oberflächenprofils (Q1, Q2, Q3, Q4) der Oberfläche (3) der Füllmasse (5) über die Aussparung (2) hinweg bei der Messtemperatur (T1, T2, T3, T4); und
Vergleichen (M4) des zweiten Oberflächenprofils (Q1, Q2, Q3, Q4) mit dem ersten Oberflächenprofil (Q0) zur Bestimmung der Oberflächenprofiländerung.

2. Verfahren (M) nach Anspruch 1, wobei das erste Oberflächenprofil (Q0) und/oder das zweite Oberflächenprofil (Q1, Q2, Q3, Q4) mit einer taktilen Profilmessung und/oder einer optischen Profilmessung ermittelt wird.

3. Verfahren (M) nach einem der vorstehenden Ansprüche, wobei das erste Oberflächenprofil (Q0) und/oder das zweite Oberflächenprofil (Q1, Q2, Q3, Q4) unter einer mechanischen Belastung (B1, B2) der Aussparung (2) mit einer Zugspannung, einer Druckspannung und/oder einer Schubspannung ermittelt wird.

4. Verfahren (M) nach einem der vorstehenden Ansprüche, wobei die Aussparung (2) mit der Füllmasse (5) mittels einer Stickstoffkühlung (12) abgekühlt wird.

5. Verfahren (M) nach einem der vorstehenden Ansprüche, wobei die Aussparung (2) als Fügeübergang zwischen Fügebauteilen (10, 10') oder als Vertiefung in einem Bauteil gebildet wird.

6. Verfahren (M) nach Anspruch 5, wobei die Aussparung (2) zwischen Fügebauteilen (10, 10') aus Aluminium und/oder kohlefaserverstärktem Kunststoff gebildet wird.

7. Verfahren (M) nach Anspruch 5 oder 6, wobei eine mechanische Belastung (B1, B2) der Aussparung (2) mit einer Zugspannung, einer Druckspannung und/oder einer Schubspannung durch Schraubenvorspannen der Fügebauteile (10, 10') aufgebaut wird.

8. Verfahren (M) nach einem der Ansprüche 5 bis 7, wobei die Fügebauteile (10, 10') mit der dazwischenliegenden Aussparung (2) oder das Bauteil mit der Aussparung (2) in eine Kühlplatte (6) eingesetzt werden.

9. Verfahren (M) nach Anspruch 8, wobei eine Kühlflüssigkeit und/oder ein gekühltes Gas, insbesondere Stickstoff (15), durch die Kühlplatte (6) zum Abkühlen (M2) der Aussparung (2) geleitet wird.

10. Verfahren (M) nach Anspruch 8 oder 9, wobei die Aussparung (2) zusammen mit den Fügebauteilen (10, 10') oder zusammen mit dem Bauteil gekühlt wird.

11. Verfahren (M) nach Anspruch 10, wobei eine Schraubenspannvorrichtung (17) zur mechanischen Belastung der Fügebauteile (10, 10') in die Kühlplatte (6) integriert ist und die Schraubenspannvorrichtung (17) mitgekühlt wird.

12. Verwendung eines Verfahrens (M) nach einem der Ansprüche 1 bis 11 zum zur Bestimmung einer Oberflächenprofiländerung einer Füllmasse (5) in einer Aussparung (2) in einer Struktur und/oder zwischen Strukturen, insbesondere Flügelstrukturen, eines Luft- oder Raumfahrzeugs.
